# FASCICULE DE BREVET EUROPEEN

(11) **EP 0 744 613 B1**
(45) Date de publication et mention de la délivrance du brevet: **03.03.2004**
(21) Numéro de dépôt: 96401085.4
(22) Date de dépôt: 17.05.1996
(51) Int. Cl.: G01N 15/14

(54) **Dispositif d'inspection optique d'un fluide, notamment pour analyses hématologiques**
Vorrichtung zur optischen Untersuchung eines Fluids, insbesondere zur hämatologischen Analyse
Device for optical inspection of a fluid, especially for hematological analysis

(30) Priorité: 24.05.1995 FR 9506228; 27.11.1995 FR 9514033
(43) Date de publication de la demande: 27.11.1996
(73) Titulaire: ABX, 34090 Montpellier (FR)
(72) Inventeur: Lefevre, Didier, 34980 Saint Clement de Riviere (FR); Kress, Bernard, 67000 Strasbourg (FR)
(74) Mandataire: Plaçais, Jean-Yves

(56) Documents cités:
- EP-A- 0 424 934
- EP-A- 0 425 381
- US-A- 3 754 814
- US-A- 4 348 107
- US-A- 4 930 893
- US-A- 5 027 359
- US-A- 5 029 975
- US-A- 5 370 842
- JOURNAL OF APPLIED PHYSICS, vol. 74, no. 7, 1 Octobre 1993, pages 4310-4316, XP000402747 SKUPSKY S ET AL: "SPECKLE-FREE PHASE PLATE (DIFFUSER) FOR FAR-FIELD APPLICATIONS"

## Description

L'invention concerne l'inspection optique de particules d'un fluide gazeux ou liquide, et plus particulièrement la mise en forme des faisceaux lumineux utilisés dans les appareils de comptage particulaires, notamment dans la cytométrie de flux, l'hématologie et le diagnostic médical.

Certains appareils actuels distinguent automatiquement les particules du fluide selon leur famille d'appartenance, et dans certains cas l'appartenance à des sous-variétés d'une famille. Ces distinctions nécessitent soit plusieurs dispositifs différents capables chacun d'effectuer une partie de l'analyse souhaitée, soit un dispositif équipé de plusieurs zones (ou chambres) d'analyses mises en série.

Un dispositif capable d'effectuer une partie de ce type d'analyse est décrit dans le Brevet français FR-A-2 653 885 de la Demanderesse. Il comprend un espace de mesure (ou cuve) comportant un passage obligé pour le fluide, des moyens optiques amont propres à collecter la lumière issue d'une source et à délivrer cette lumière collectée au niveau du passage obligé selon des caractéristiques géométriques et spectrales choisies, et des premiers moyens capteurs propres à délivrer à une unité d'analyse des signaux ("premiers signaux") représentatifs d'informations ("premières informations") véhiculées par une lumière, de caractéristiques géométriques et spectrales choisies, collectée par des premiers moyens optiques aval après traversée du passage obligé.

On entend par caractéristiques spectrales aussi bien l'intensité que la longueur d'onde de la lumière source ou de la lumière obtenue après interaction avec le fluide au niveau du passage obligé, et par caractéristiques géométriques la forme générale et la topologie de la zone illuminée ou de la zone de mesure du capteur concerné.

Par ailleurs, on entend par moyens optiques, l'optique de collection de la lumière en amont ou en aval du passage obligé (par exemple un objectif de microscope), et par moyens capteurs des éléments électroniques de détection de type diode, photomultiplicateur, ou autre capteur analogue.

Une des difficultés de ces mesures réside dans le fait que les particules du fluide à inspecter, qui traversent le passage obligé sous illumination, doivent recevoir une même intensité lumineuse en un même intervalle de temps. En d'autres termes, la répartition de lumière sur toute la surface définie par le passage obligé doit être uniforme. Cela nécessite une mise en forme préalable du faisceau délivré par la source de lumière et destiné à illuminer ledit passage obligé.

Par ailleurs, en raison des caractéristiques géométriques et spectrales de la lumière obtenue après interaction entre le fluide et le faisceau de lumière issu de la source, il est actuellement nécessaire d'utiliser des moyens optiques nombreux et encombrants.

En résumé, les dispositifs actuels présentent un certain nombre d'inconvénients, comme par exemple l'encombrement, la complexité, les fourchettes d'incertitude relativement importantes qui entachent les résultats des mesures, ou l'impossibilité de différencier les sous-variétés d'une famille donnée. On reviendra plus loin, et dans le détail, sur ces inconvénients.

Un but de l'invention est donc de procurer un dispositif d'inspection optique de particules d'un fluide, du type décrit en introduction, qui ne présente pas les inconvénients des dispositifs de la technique antérieure, notamment en termes de rendement, d'encombrement, de complexité et de coût.

Selon l'invention, l'un au moins des moyens optiques amont et des premiers moyens optiques aval comprend au moins un premier élément optique diffractif destiné selon sa position par rapport au passage obligé, à la mise en forme géométrique et/ou spectrale, soit du faisceau de lumière délivré par la source, soit de la lumière obtenue après interaction entre le fluide et la lumière source.

Cet élément possède au moins une surface qui interagit avec la lumière qu'elle collecte, et présente un premier motif tridimensionnel prédéterminé propre à réaliser une interaction prédéterminée entre la lumière qu'elle collecte et la lumière qu'elle délivre, compte tenu des caractéristiques respectives de ces deux lumières.

On entend par élément optique diffractif, un composant dont une face au moins présente un motif réalisant une structure capable de faire interférer de façon constructive, selon les lois de l'optique diffractive, les photons émis par une source de caractéristiques connues.

De la sorte, la mise en forme peut porter sur le faisceau en amont de l'espace d'interaction entre le fluide et la lumière source et/ou en aval de celui-ci.

Selon un aspect de l'invention, les caractéristiques géométriques et spectrales choisies, requises pour l'illumination du passage obligé, comprennent une illumination uniforme, à la longueur d'onde choisie, d'une surface sensiblement plane, fermée et de géométrie donnée.

Il a été observé qu'en remplaçant une partie au moins des moyens optiques destinés dans la technique antérieure à mettre en forme la lumière émise par la source, par un unique élément optique diffractif de très faible encombrement et adapté spécifiquement, d'une part, à la source, et d'autre part, aux caractéristiques géométriques et spectrales requises pour l'illumination du fluide à analyser, il est possible de réduire notablement l'encombrement du dispositif, et surtout d'améliorer très notablement la précision et la résolution des mesures.

Aucune optique géométrique conventionnelle de faible encombrement et de coût modéré ne peut permettre l'obtention d'une illumination vérifiant de telles caractéristiques.

De même, aucun moyen optique conventionnel de faible encombrement et de coût modéré ne peut permettre de collecter la lumière issue de l'interaction entre le fluide et la lumière source avec autant d'efficacité tout en permettant un filtrage géométrique et/ou spectral de cette lumière collectée.

Selon une autre caractéristique de l'invention, la source de lumière est une source à rayonnement sensiblement monochromatique dont la longueur d'onde d'émission est choisie de sorte qu'elle induise la fluorescence d'une partie au moins du fluide traversant le passage obligé. Par ailleurs, on prévoit de seconds moyens capteurs destinés à collecter une partie au moins de la fluorescence émise par le fluide et à délivrer, à l'unité d'analyse, des signaux (seconds signaux) représentatifs d'informations (secondes informations) véhiculées par cette fluorescence collectée.

Le fluide à inspecter est préalablement traité par un moyen cytochimique approprié consistant à colorer spécifiquement certaines sous-variétés des particules qu'il contient au moyen d'un colorant fluorescent.

En remplaçant la source de la technique antérieure, de type lampe, par une source monochromatique, comme par exemple une diode laser, il est possible d'adapter le dispositif au fluide à analyser afin que la longueur d'onde émise par cette source puisse provoquer la fluorescence des sous-variétés colorées.

Plusieurs modes de réalisation du dispositif selon l'invention peuvent être envisagés. Un premier mode dans lequel on utilise un seul élément optique diffractif en amont du passage obligé pour la mise en forme de la lumière source, la collection de la lumière issue de l'interaction entre le fluide et la lumière source s'effectuant de façon conventionnelle par des moyens optiques réfractifs. Un second mode dans lequel on n'utilise un ou plusieurs éléments optiques diffractifs que pour collecter la lumière issue de l'interaction entre le fluide et la lumière source, la mise en forme de la lumière source s'effectuant de façon conventionnelle par des moyens optiques réfractifs. Un troisième mode dans lequel on utilise un élément optique diffractif en amont du passage obligé pour la mise en forme de la lumière source, et un ou plusieurs éléments optiques diffractifs pour collecter la lumière issue de l'interaction entre le fluide et la lumière source.

Dans le premier mode de réalisation, la coopération de la source monochromatique avec un élément optique diffractif, placé en amont du passage obligé et conçu pour travailler avec cette source particulière, renforce notablement la qualité de l'illumination, sur le plan de la définition de la surface illuminée et surtout de l'uniformité de l'intensité de l'illumination sur l'ensemble de l'aire de ladite surface.

Dans le second mode de réalisation, le dispositif peut intégrer une pluralité de techniques d'analyses différentes et non destructives, et notamment les techniques d'analyse de la fluorescence, d'analyse par transmission et d'analyse de diffraction à différents angles, dans un volume plus restreint que dans les dispositifs de la technique antérieure. De plus, ces analyses peuvent être réalisées en même temps et avec un unique échantillon.

On peut également envisager la séparation entre plusieurs longueurs d'onde contenues dans un faisceau d'entrée pour former plusieurs faisceaux monochromatiques non colinéaires, et focaliser chaque faisceau en un lieu donné prédéterminé avec une géométrie particulière. Mais on peut également effectuer un filtrage spectral et/ou géométrique.

Dans le troisième mode de réalisation, on peut désormais s'affranchir de tout ou partie des éléments optiques traditionnels, de type objectif de microscope ou lentille convergente.

Très avantageusement, les premier et second motifs tridimensionnels sont des premier et second réseaux diffractifs gravés dans des substrats transparents à la longueur d'onde de la lumière source et/ou la longueur d'onde de fluorescence.

On pourrait envisager de réaliser les réseaux diffractifs par holographie classique, en figeant des franges d'interférences dans une émulsion photosensible. Mais, de tels réseaux ne présentent pas toujours la stabilité temporelle voulue, et leur fabrication industrielle est plus difficile que celle d'un réseau diffractif gravé.

De tels réseaux diffractifs gravés peuvent être réalisés par microlithographie, par exemple, par faisceau d'électrons ou ablation laser. Le substrat peut être choisi en fonction de la longueur d'onde d'émission et de la longueur d'onde de fluorescence de sorte qu'il soit le moins absorbant possible, permettant ainsi de renforcer l'efficacité de diffraction de l'élément optique diffractif.

Selon un autre aspect de l'invention, les premier et second réseaux diffractifs sont de type numérique à modulation de relief, ladite modulation représentant une fonction prédéterminée capable d'action diffractante cohérente sur la phase et/ou l'amplitude respectivement de la lumière émise par la source et de la lumière obtenue après traversée du passage obligé.

Chaque fonction est déterminée à l'aide d'un calculateur, en prenant en compte les caractéristiques de la lumière à collecter (source, ou faisceau transmis et fluorescence) et de la surface à illuminer (fluide, ou surface de détection du ou des détecteurs), puis transformée numériquement en éléments de base qui forment un réseau diffractif. Chaque élément possède une position donnée et une hauteur donnée, ce qui justifie l'appellation de réseau diffractif à modulation de relief.

Selon une autre caractéristique de l'invention, chaque réseau diffractif possède une modulation de relief d'au moins deux niveaux, et de préférence seize niveaux.

La modulation étant réalisée numériquement, la hauteur de chaque élément est codée de façon binaire. On peut donc associer un niveau à chaque hauteur. Le nombre de niveaux de modulation varie, en conséquence, selon les puissances de 2. Ce nombre ne peut donc prendre en principe que les valeurs 2, 4, 8, 16...

L'efficacité de la diffraction de chaque réseau va dépendre du degré de similitude entre la fonction diffractante calculée et le motif tridimensionnel gravé. Ce degré de similitude dépend, quant à lui, du pas entre deux niveaux consécutifs, ou en d'autres termes du nombre de niveaux définissant l'amplitude maximum de la fonction diffractante.

Plus le nombre de niveaux est important, plus l'efficacité de la diffraction est grande. Mais, on peut démontrer que cette efficacité croit rapidement jusqu'à environ 95%, lorsque l'intensité maximale de la fonction est convertie en 16 niveaux, puis elle tend très lentement vers une asymptote correspondant à 100% d'efficacité. Cependant, les coûts de fabrication d'un réseau à modulation de relief croissent de façon sensiblement exponentielle avec le nombre de niveaux. En conséquence, une modulation à plus de 16 niveaux entraînerait des coûts supplémentaires très important pour un gain d'efficacité très faible.

Les éléments optiques diffractifs peuvent être du type dit de Fourier ou du type dit de Fresnel. Bien entendu, l'un peut être du type Fresnel tandis que l'autre (ou un autre) est du type Fourier, ou inversement.

On entend par optique de Fourier, un élément qui délivre un faisceau d'ondes dont les ordres +1 et -1 sont réels, ce qui autorise deux variantes. Une première variante dite "centrée" (ou en anglais "on axis") dans laquelle les deux ordres +1 et -1 se recouvrent sur l'axe optique de l'élément. Une seconde variante dite "décentrée" (ou en anglais "off axis") dans laquelle les deux ordres +1 et -1 sont répartis symétriquement de part et d'autre de l'axe optique de l'élément, sans se recouvrir. La seconde variante permet certes d'obtenir un mode plus propre car en sélectionnant l'un des ordres +1 ou -1 désaxés on s'affranchît de l'ordre central résiduel 0, mais cela divise le rendement de diffraction par deux puisque l'énergie apportée par chaque ordre n'est plus sommée. Ce type d'élément délivre une image de l'objet en champ lointain, ce qui veut dire que l'image de l'objet est nette à l'infini.

On entend par optique de Fresnel, un élément qui délivre un faisceau d'ondes dont l'ordre +1 est réel et l'ordre -1 est virtuel, ce qui n'autorise qu'une possibilité. Une telle optique est donc équivalente à une lentille en optique géométrique conventionnelle. Ce type d'élément délivre une image de l'objet en champ proche.

Préférentiellement, l'élément optique diffractif, chargé de la mise en forme du faisceau en amont du passage obligé, comprend une unique surface comportant un motif diffractant de type Fresnel à seize niveaux.

Cette solution est préférée actuellement car, comme indiqué ci-dessus, l'optique de Fresnel délivre une image de l'objet en champ proche. Par conséquent, l'élément diffractif peut à lui seul réaliser à la fois une distribution uniforme de l'énergie contenue dans le faisceau incident, et focaliser cette énergie en un endroit donné, comme par exemple à la frontale d'un objectif, ou directement au niveau du passage obligé, sans qu'il soit nécessaire d'interposer une lentille de focalisation, ce qui est le cas pour les optiques de Fourier. Cela permet donc de réduire encore un peu plus l'encombrement du dispositif d'inspection.

De façon également préférentielle, l'élément optique diffractif, chargé de la mise en forme de la lumière en aval du passage obligé, comprend une unique surface comportant un motif diffractant de type Fourier à seize niveaux.

Cette solution est préférée actuellement car, comme indiqué ci-dessus, l'optique de Fourier délivre une image de l'objet en champ lointain et peut fonctionner en mode centré permettant ainsi de délivrer l'image nette du faisceau transmis et/ou de la fluorescence sur une surface de détection relativement éloignée, sans faire appel à d'autres éléments optiques, et de perdre un minimum de signal lumineux.

Dans la description qui suit, faite à titre d'exemple, on se réfère aux dessins annexés, sur lesquels :
- la figure 1 est un schéma illustrant un dispositif selon l'invention dans un premier mode de réalisation;
- la figure 2 est un agrandissement d'une partie centrale de la zone d'interaction entre le faisceau calibré d'analyse et le fluide, du dispositif de la figure 1;
- les figures 3A et 3B illustrent respectivement une partie d'un élément optique diffractif vue en coupe transversale pour une modulation à 2 niveaux (A) et à 16 niveaux (B);
- la figure 4 est un exemple d'image de réseau diffractif de type Fresnel à deux niveaux de phase;
- la figure 5 est un schéma illustrant un dispositif selon l'invention dans un second mode de réalisation;
- la figure 6 est un exemple d'image de réseau diffractif de type Fourier à deux niveaux de phase;
- la figure 7 est un schéma illustrant une variante partielle et simplifiée du dispositif de la figure 5; et
- la figure 8 est un schéma illustrant un dispositif selon l'invention dans un troisième mode de réalisation.

Les dessins annexés comportent de nombreux éléments de caractère certain, qu'il est difficile de définir complètement par le texte. En conséquence, ils font à ce titre partie intégrante de la description, et pourront contribuer à la définition de l'invention.

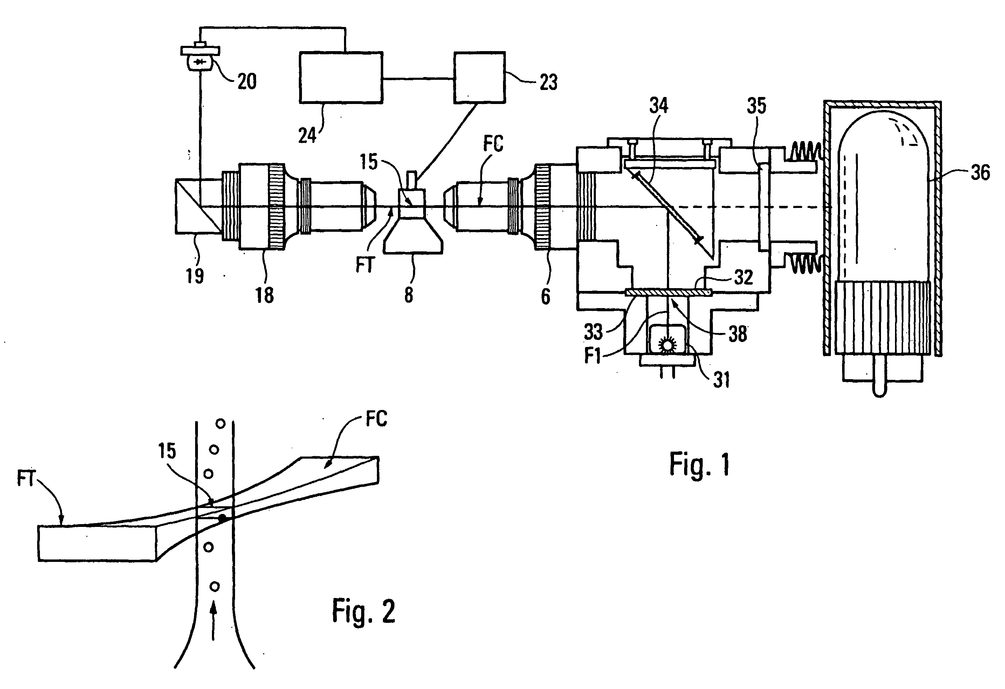

On se réfère tout d'abord aux figures 1 et 2 pour décrire un premier mode de réalisation du dispositif selon l'invention.

Le dispositif comprend une source de lumière monochromatique de très faible consommation électrique et dont la longueur d'onde d'émission est choisie en fonction de la bande spectrale d'excitation du colorant fluorescent choisi pour colorer certaines sous-variétés de particules du fluide à analyser. De préférence, cette source est une diode laser, mais elle peut être un laser, ou plus généralement une source dont la longueur d'onde et la puissance d'émission autorisent la fluorescence de sous-variétés colorées à analyser.

La diode laser 31 délivre un faisceau F1, de section droite sensiblement elliptique et dont l'énergie présente une répartition gaussienne, en direction d'un élément optique diffractif 32 sur lequel on reviendra ultérieurement. Cet élément 32 possède une surface avant 33, en regard de la diode active, qui agit sur le faisceau F1 délivré par cette diode 31 de sorte qu'il présente des caractéristiques géométriques et spectrales choisies au niveau d'un passage obligé 15 de l'espace de mesure 8, qui est ici une cuve. On appelle FC le faisceau traité par l'élément optique diffractif 32.

Les caractéristiques géométriques portent sur la forme du faisceau FC et sur ses dimensions dans le passage obligé 15, lesquelles doivent être sensiblement égales aux dimensions transversales du flux. Dans l'exemple décrit, le faisceau possède une forme rectangulaire de dimensions, par exemple 100 µm x 30 µm. Bien entendu, dans d'autres applications, ou bien si l'espace de mesure n'est pas une cuve, la forme du faisceau FC au niveau du passage obligé pourra être différente d'un rectangle. Il en va de même des dimensions. Presque toutes les formes de faisceau peuvent être envisagées puisque l'élément diffractif est réalisé en fonction des caractéristiques de la source et des caractéristiques que doit présenter le faisceau au niveau du passage obligé 15 dans l'espace de mesure 8.

Par ailleurs, les caractéristiques spectrales portent sur la répartition énergétique au niveau du passage obligé, laquelle doit être quasi-uniforme (de préférence avec des écarts inférieurs à 5%) sur l'ensemble du rectangle décrit ci-dessus, et sur la monochromaticité du faisceau, laquelle est assurée directement par la source.

Dans le mode de réalisation illustré, l'élément diffractif 32 délivre en fait un faisceau FC de répartition énergétique uniforme et rectangulaire, mais de dimensions supérieures à celles décrites précédemment, au niveau de la frontale d'un premier objectif de microscope 6 (x20), lequel réduit les dimensions du faisceau rectangulaire de sorte qu'elles soient égales à celles requises au niveau du passage obligé 15 (ici, 100 µm x 30 µm). Il y a donc coopération entre l'élément diffractif et le premier objectif 6 pour délivrer le faisceau FC au niveau de la chambre de mesure 16. Mais, il est clair que l'on peut se passer d'une telle coopération, l'élément diffractif étant alors conçu pour délivrer le faisceau de caractéristiques choisies directement au niveau du passage obligé 15 de la cuve 8.

Par ailleurs, dans l'exemple illustré, le faisceau F1 issu de la diode 31 est orienté perpendiculairement à l'axe optique d'analyse. En conséquence, pour atteindre le premier objectif 6, le faisceau F1 subit une réflexion à 90° sur une lame dichroïque 34 centrée sur l'axe optique d'analyse.

Au delà du premier objectif, le faisceau FC traverse le passage obligé 15 de la cuve de mesure 8. Il est alors transformé en un faisceau transmis FT par interaction avec le fluide, puis pénètre dans un second objectif de microscope 18 (x20), identique au premier 8, qui le met en forme et le dirige vers un cube séparateur 19 qui le réfléchit perpendiculairement vers une photodiode de collection 20. Cette photodiode est placée à une distance du passage obligé 15 égale à celle qui sépare l'élément diffractif 32 de ce même passage obligé. Ainsi, les dimensions du faisceau transmis FT au niveau de la photodiode 20 sont sensiblement égales à celles que présente le faisceau en sortie de l'élément diffractif 32. Le second objectif 18, le cube séparateur 19 et la photodiode 20 forment de premiers moyens optoélectroniques.

La photodiode 20 mesure l'intensité du faisceau transmis FT, lequel est plus ou moins absorbé par les différentes sous-variétés de particules du fluide avec lesquelles il interagit. Cette fluctuation de l'absorbance, qui permet de différencier les sous-variétés de particules, est due non seulement à leurs différents volumes, mais aussi à leur particularités internes. Cette mesure est transformée en signaux qui sont adressés à une unité d'analyse 24, où ils sont éventuellement corrélés à d'autres signaux issus d'une autre voie 23 en vue d'un comptage des sous-variétés de particules. Cette dernière technique, ainsi que d'autres qui permettent d'effectuer des mesures par résistivité et par transmission sont parfaitement connues de l'homme de l'art et sont détaillées dans le Brevet français précité.

On peut prévoir également une voie de mise au point des objectifs sensiblement dans l'axe du faisceau transmis FT. Elle comprend un dépoli 21 permettant de former l'image superposée du faisceau FC au niveau du passage obligé 15 et du fluide, et une lentille divergente 22 interposée entre le dépoli 21 et le cube séparateur 19 destiné à grossir l'image superposée précitée.

Le dispositif proposé comprend également de seconds moyens optoélectroniques (moyens optiques et capteurs) pour collecter d'autres informations dans la cuve de mesure.

En effet, la longueur d'onde d'émission de la diode laser 31 est choisie afin d'induire la fluorescence de certaines sous-variétés de particules contenues dans le fluide à analyser et préalablement colorées par un colorant fluorescent approprié. Soumis à un rayonnement lumineux incident donné, le colorant contenu dans les particules colorées absorbe ce rayonnement et réémet quasi-instantanément (10⁻⁸ s) et de façon isotrope un rayonnement de longueur d'onde supérieure au rayonnement incident. Cette réémission est appelée fluorescence. Il est donc possible de récupérer une partie de la fluorescence, soit à 90° de l'axe optique d'analyse, soit parallèlement à cet axe (épifluorescence). Le dispositif de la figure 1 illustre une mesure d'épifluorescence à 0° (fluorescence recueillie parallèlement à l'axe optiques dans la direction opposée au faisceau F1 issu de la diode 31).

La fluorescence à collecter traverse le premier objectif 6, puis la lame dichroïque 34, et se dirige vers un filtre interférentiel 35 qui sélectionne la seule longueur d'onde de fluorescence des particules fluorescentes, ce qui permet de rejeter toutes les autres longueurs d'onde parasites, comme par exemple celle de la diode laser. Puis, une fois filtrée, la fluorescence est collectée par un tube photomultiplicateur 36 connecté à l'unité d'analyse 24. L'intensité mesurée par le tube 36, sur un intervalle de temps donné, est corrélée aux autres mesures par transmission et par résistivité, ce qui permet d'en déduire des informations sur certaines sous-variétés de particules, et notamment sur leurs nombres respectifs.

Il est clair que l'on peut parfaitement intervertir les positionnement respectifs du tube photomultiplicateur et de la diode laser couplée à l'élément diffractif. De même, on peut réaliser le dispositif selon l'invention en logeant la diode laser, couplée à l'élément diffractif, parallèlement à l'axe optique d'analyse, et en plaçant les seconds moyens optoélectroniques de collection de la fluorescence (tube photomultiplicateur et filtre interférentiel) en regard de l'espace de mesure 8 afin de collecter la fluorescence à 90° de cet axe optique d'analyse.

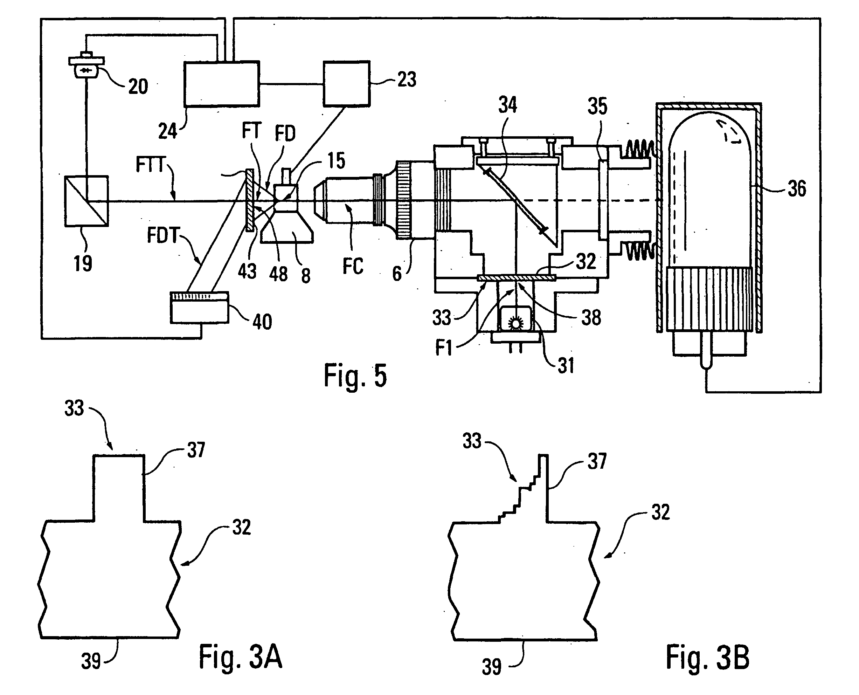

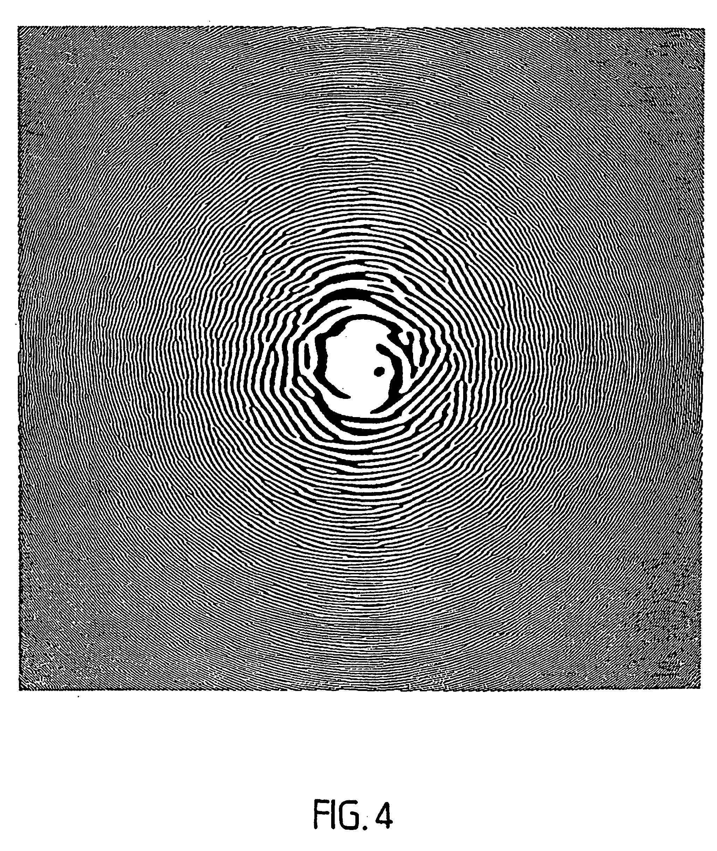

L'élément optique diffractif 32 (voir figures 3A, 3B et 4) comprend sur sa face avant 33, en regard de la diode laser 31, un motif tridimensionnel formé par juxtaposition d'éléments de base 37 sensiblement carrés, et de hauteur variable. Cette juxtaposition forme un réseau diffractif 38 à modulation de relief. La hauteur de chaque élément de base est obtenue par numérisation d'une fonction capable d'action diffractante cohérente sur la phase et/ou l'amplitude de la lumière émise par la source.

Le calcul de la fonction diffractante peut être réalisé par des Etablissements comme le Laboratoire des Systèmes Photoniques de l'Ecole Nationale Supérieure de Physique de Strasbourg, laquelle procède également à la numérisation de cette fonction de sorte que l'on puisse piloter la machine destinée à réaliser le motif diffractant correspondant à ladite fonction.

Ce calcul est réalisé à l'aide d'un logiciel de conception de systèmes optiques assistée par ordinateur. Connaissant les caractéristiques des ondes du faisceau F1 délivré par la diode laser 31, et les caractéristiques que les ondes du faisceau doivent présenter au niveau de la frontale de l'objectif 6, il est possible, en assimilant l'élément optique diffractif 32 à une matrice de transfert, et en utilisant un algorithme de calcul itératif capable de résoudre les équations de Maxwell, de calculer une fonction diffractante capable de transformer le faisceau issu de la diode en un faisceau d'analyse. Bien entendu, bien que l'algorithme soit itératif, il peut être nécessaire d'effectuer des approximations successives pour déterminer une fonction diffractante.

Un certain nombre d'algorithmes peuvent être utilisés pour le calcul, comme par exemple ceux connus sous les noms : "algorithme de recuit simulé", "algorithme de Gerchberg-Saxton en champ proche", "algorithme de diffusion d'erreurs complexes", ou "algorithme de génétique basé sur la théorie de l'évolution de Darwin". Ces algorithmes prennent également en compte les caractéristiques du substrat dans lequel l'élément diffractif est réalisé, la technique de fabrication du réseau diffractant sur cet élément, et le type de ce réseau (Fourier ou Fresnel). Le réseau de Fresnel est préférable car, fournissant des images en champ proche, il ne nécessite pas l'utilisation d'une lentille convergente.

Une fois la fonction diffractante calculée, il est nécessaire de la numériser, afin que l'on puisse la transformer en un fichier informatique représentatif d'un motif numérique formant réseau diffractif. Ce fichier est généralement sous la forme d'une matrice 1024 x 1024 éléments, chaque élément codant une partie du motif.

Pour cela on associe une valeur binaire (ou un niveau) à la valeur de la fonction en un point donné. L'encodage étant binaire, sa précision dépend donc du pas existant entre deux valeurs consécutives. Pour obtenir un pas très petit, il est nécessaire que l'amplitude maximale de la fonction corresponde à un nombre de niveaux le plus important possible.

Pour des raisons matérielles, il n'est pas possible de définir ici de manière exhaustive, sur 1024 x 1024 points, un réseau diffractif par exemple de type Fresnel à deux niveaux de phase. A défaut, une image à deux niveaux (noir et blanc) d'un exemple d'un tel réseau diffractif est illustré sur la figure 4.

Comme expliqué dans l'introduction, au-delà de 16 niveaux le rendement de diffraction de l'élément optique augmente très lentement tandis que son coût de fabrication croit très rapidement. En conséquence, un élément optique diffractif à 16 niveaux, qui donne un rendement de diffraction d'environ 95%, est suffisant pour permettre l'obtention d'un faisceau d'analyse d'homogénéité constante à environ 5% près.

On peut voir respectivement sur les figures 3A et 3B une coupe transversale d'un élément diffractif 32 dont les éléments de base 37 de son réseau diffractif 38 sont binaires (A) ou à 16 niveaux (B).

L'action de l'élément diffractif 32 étant régie par les lois de la diffraction, chaque élément de base 37 possède des dimensions sensiblement égales ou inférieures à la longueur d'onde d'émission de la diode 31. En conséquence, pour réaliser ces éléments de base, il est indispensable d'utiliser une technique dont la résolution est de l'ordre de la dizaine de nanomètres. Actuellement, la meilleure technique est la microlithographie, et plus particulièrement celle utilisant un masque de chrome à "niveaux de gris binaires".

Le masque de chrome est réalisé sous forme de niveaux de gris codés de façon binaire, à l'image d'un dégradé de gris réalisé par une imprimante de type laser. Ce masque est déposé au-dessus d'une couche de résist qui est elle-même déposée sur un substrat. Le masque est illuminé par une lumière ultra-violette, qui sous l'effet des différents niveaux dudit masque va provoquer l'impression du résist selon des doses variables. Le résist qui contient une image du relief à transférer est alors développé, ce qui révèle ledit relief. Puis, on effectue le transfert du relief du résist développé vers le substrat par usinage réactif ionique sélectif (plus connu en anglais sous l'acronyme RIBE).

Chaque élément de base 37 est ainsi gravé dans un substrat 39, transparent à la longueur d'onde d'émission de la diode laser 31. Ce substrat est réalisé dans un matériau de type quartz ou BK7.

Bien entendu, on peut prévoir de nombreux autres types de substrat. De même, les méthodes de fabrication ne se limitent pas à celle décrite ci-dessus. Toute autre méthode capable de réaliser un réseau diffractant du type décrit ci-avant pourra être envisagée. Ainsi, on pourra utiliser une technique d'embossage comme cela est le cas dans le domaine des disques compacts audio.

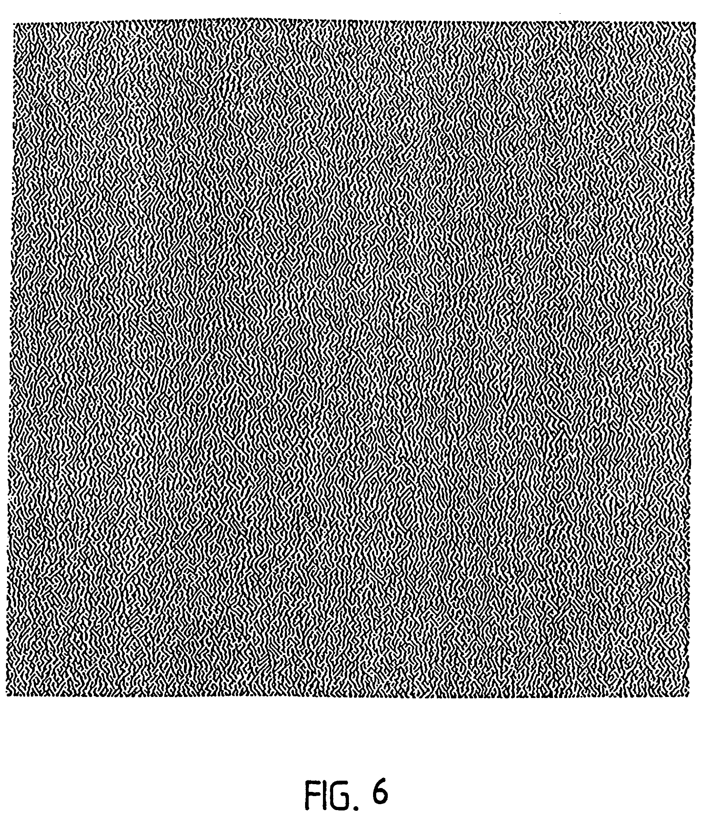

Il est maintenant fait référence à la figure 5 pour décrire un mode de réalisation préférentiel de l'invention, lequel comprend l'intégralité des éléments du dispositif de la figure 1, à l'exception de l'objectif de microscope 18 qui est remplacé par un second élément optique diffractif 42 qui reçoit sur sa face d'entrée 43 le faisceau transmis FT issu de la cuve 8, et le transforme en un faisceau transmis traité FTT et un faisceau diffracté traité FDT.

Le dispositif comprend donc des premiers moyens optoélectroniques 19 et 20, installés en aval de la cuve 8 et du second élément optique diffractif 42, pour effectuer des analyses par transmission en utilisant le faisceau transmis traité FTT, ainsi que des seconds moyens optoélectroniques 34-36 pour effectuer des analyses de fluorescence, ces seconds moyens étant également installés en amont du passage obligé 15 afin de collecter l'épifluorescence.

Dans ce mode de réalisation, on prévoit également, en aval du passage obligé 15 et du second élément optique diffractif 42, des troisièmes moyens optoélectroniques pour effectuer des analyses de diffraction à différents angles sur le faisceau diffracté traité FDT. Cette technique d'analyse, qui est bien connue de l'homme de l'art, permet d'obtenir des informations sur l'état de surface, la morphologie (forme) et le contenu de certaines particules, en fonction de l'angle de diffraction que présente le faisceau diffracté FD issu de l'interaction entre le fluide et une partie du faisceau de lumière F1 issu de la source.

Ces troisièmes moyens optoélectroniques comprennent un détecteur 40 permettant de délivrer à l'unité d'analyse 24, à laquelle il est connecté, des signaux analogiques (mais ils peuvent être également numériques) représentatifs d'informations véhiculées par la lumière diffractée traitée FDT. Le détecteur 40 comprend, par exemple, une ou plusieurs galettes microcanaux, ou une pluralité de microcellules photo-électriques permettant de détecter précisément les coordonnées planaires d'un photon diffracté qui l'atteint.

A réception d'un signal issu du détecteur 40, l'unité de traitement 24 est en mesure d'en déduire précisément l'angle de diffraction. Ce signal peut être corrélé à d'autres signaux issus des autres voies d'analyse (20,36,23) afin d'en déduire des informations sur la sous-variété de particule qui a provoqué cette diffraction.

On se réfère maintenant aux figures 3A, 3B et 6 pour décrire le second élément optique diffractif 42, lequel peut être réalisé de la même façon que le premier élément optique diffractif 32, par exemple par gravure. Seul son motif diffractif tridimensionnel, et donc son réseau diffractif 38 à modulation de relief, est totalement différent du premier. En conséquence, ces différentes parties portent les mêmes références que ceux du premier élément, augmentées de 10.

Néanmoins, dans un mode de réalisation différent de celui-ci, dans lequel la fluorescence serait recueillie en aval de la cuve (à 0°), son substrat peut également ne pas être identique à celui du premier élément, dans la mesure où il doit être transparent non seulement à la longueur d'onde de la lumière émise par la source, mais également à la longueur d'onde de fluorescence.

Son motif tridimensionnel est formé par juxtaposition d'éléments de base 47 sensiblement carrés, et de hauteur variable, cette juxtaposition formant le réseau diffractif 48 à modulation de relief gravé sur la face avant 43, en regard du passage obligé 15.

Le calcul du motif tridimensionnel est également réalisé à l'aide du logiciel de conception de systèmes optiques assistée par ordinateur. L'élément optique est assimilé à une fonction de transfert entre les deux entrées constituées des faisceaux transmis FT et diffractés FD issus de la cuve 8 et les sorties constituées des voies d'analyse par transmission et par diffraction. En fait, il faut que la fonction de transfert permette la focalisation sans perte d'information, d'une part, du faisceau transmis sur la surface de détection de la photodiode 20, et d'autre part, du faisceau diffracté sur la surface de détection du détecteur 40 de sorte qu'à un angle de diffraction donné en sortie de la cuve 8 corresponde un élément de détection sur ledit détecteur 40.

Les paramètres de ce calcul sont donc, en entrée, la longueur d'onde (ou la fréquence) de la lumière source, la géométrie du faisceau transmis FT et la géométrie des faisceaux diffractés FD, et en sortie, la géométrie du faisceau transmis traité FTT au niveau de la surface de détection de la diode 20 et la géométrie du faisceau diffracté transmis FDT au niveau de la surface de détection du détecteur 40.

Bien entendu, si le second élément optique diffractif devait également traiter la fluorescence, sa fonction de transfert devrait également prendre en compte, en entrée, la longueur d'onde et la répartition géométrique de la fluorescence, et en sortie, la géométrie du "faisceau" de fluorescence transmis au niveau du filtre interférentiel 35.

Le réseau de Fourier est préférable pour ce second élément optique diffractif 42, car, d'une part, il permet lorsqu'il est en mode centré de limiter au maximum les pertes d'information, et d'autre part, fournissant des images en champ lointain, il permet de directement focaliser les faisceaux sur des détecteurs éloignés sans faire appel à une lentille convergente. Bien entendu, on pourrait envisager de graver un réseau de Fresnel, mais il faudrait alors coupler le second élément à une lentille convergente.

De préférence, la modulation de relief du second réseau est à 16 niveaux, ce qui permet d'obtenir un rendement de diffraction d'environ 95%. Un tel rendement est rendu indispensable par le très faible nombre de photons diffractés, par exemple.

Pour des raisons matérielles, il n'est pas possible de définir ici de manière exhaustive, sur 1024 x 1024 points, un réseau diffractif par exemple de type Fourier à deux niveaux de phase. A défaut, une image à deux niveaux (noir et blanc) d'un exemple d'un tel réseau diffractif est illustrée sur la figure 6.

Bien que l'invention ait été décrite en référence à un dispositif d'analyses hématologiques, elle peut servir à d'autres applications comparables, avec ou sans fluorescence, se trouvant dans le cadre des revendications ci-après.

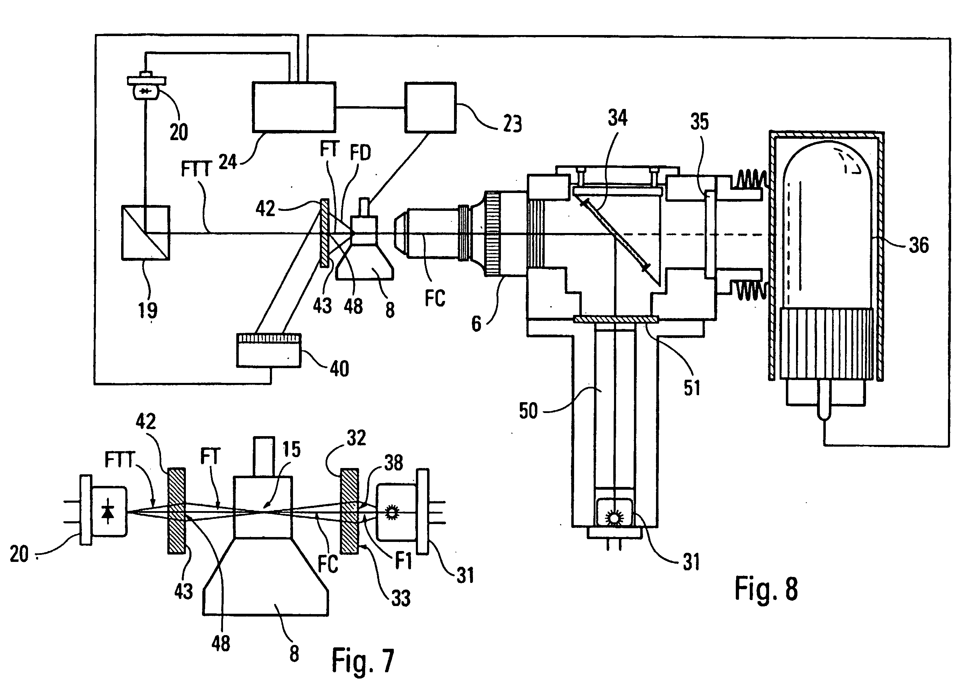

C'est par exemple le cas du dispositif illustré partiellement sur la figure 7, et qui constitue une variante simplifiée du dispositif de la figure 5. Cette variante reprend les éléments décrits en référence à la figure 5, à l'exception de ceux (34-36) qui constituaient la voie de collection de la fluorescence, de l'objectif de focalisation (6) et du détecteur de collection de la lumière diffractée (40).

L'élément diffractif 42 focalise sur la face de détection du photo-détecteur 20 l'image en champ proche de la lumière au niveau du passage obligé 15. Pour ce faire, l'élément diffractif 42 comporte sur sa face de collection 43 un motif diffractant de type Fresnel. Par ailleurs, en raison de la suppression de la voie de collection de la fluorescence, la source de lumière 31 (diode) peut être installée dans l'axe de la voie d'analyse.

Les deux éléments diffractifs 32 et 42 peuvent être collés sur les parois de la cuve 8. Dans ce cas, il est préférable que le motif diffractant 33 de l'élément diffractif 32 soit également de type Fresnel. On réalise ainsi un dispositif de très faible encombrement, de réalisation particulièrement simple et de coût réduit.

Par ailleurs, on a décrit des modes de réalisation dans lesquels le dispositif comprend soit un seul élément optique diffractif pour la mise en forme de la lumière source, soit un élément optique diffractif pour la mise en forme de la lumière source et un élément optique diffractif pour collecter la lumière issue de l'interaction entre le fluide et la lumière source. Mais, bien entendu, d'autres modes de réalisation peuvent être envisagés, comme par exemple un mode dans lequel on n'utilise qu'un (ou plusieurs) élément(s) optique(s) diffractif(s) en vue de la collection de la lumière issue de l'interaction entre le fluide et la lumière source.

Un tel mode de réalisation est illustré sur la figure 8. Il reprend les éléments décrits en référence à la figure 5, à l'exception de l'élément optique diffractif (32) qui est remplacé par un ensemble de collimation 50 du faisceau de lumière F1 délivré par la source de lumière 31 et par un diaphragme 51 de section préférentiellement rectangulaire.

La source 31 est par exemple une diode laser qui délivre un faisceau F1, de section elliptique, divergent et de répartition gaussienne. Le diaphragme 51 sélectionne la partie centrale de la gaussienne afin d'assurer une répartition homogène de la puissance lumineuse délivrée au niveau du passage obligé 15.

Un tel dispositif associe donc une optique de mise en forme du faisceau de type réfractrice, à une optique de collection de la lumière, issue de l'interaction entre le fluide et la lumière source, de type diffractrice.

D'autres modes de réalisation peuvent encore être envisagés, comme par exemple un mode dans lequel on utilise un élément optique diffractif pour la mise en forme de la lumière source et plusieurs éléments optiques diffractifs en vue de la collection de la lumière issue de l'interaction entre le fluide et la lumière source.

De telles réalisations peuvent être utiles lorsque le dispositif est destiné notamment à la séparation de faisceaux de longueurs d'onde différentes. Pour ce faire, on peut mettre en parallèle en sortie d'un réseau dispersif ou d'un prisme de dispersion, lui-même placé en sortie de l'espace de mesure (lequel peut être une enceinte quasi-fermée comme dans l'exemple décrit, ou bien une zone ouverte), les différents éléments optiques diffractifs destinés respectivement à traiter une longueur d'onde donnée. Chaque élément optique diffractif présente alors un motif tridimensionnel qui lui est propre, afin qu'il puisse assurer un filtrage de la longueur d'onde et/ou de la répartition géométrique de la lumière concernée, puis délivrer la lumière ainsi filtrée au moyen capteur concerné, selon des caractéristiques géométriques et spectrales choisies en fonction de ce moyen capteur.

L'invention s'applique de façon générale aux dispositifs d'inspection optique de particules d'un fluide gazeux ou liquide, notamment dans les domaines de la cytométrie de flux, de l'hématologie et du diagnostic médical.

## Revendications

1. Dispositif d'inspection optique d'un fluide, du type comprenant:
- un espace de mesure (8) comportant un passage obligé (15) pour le fluide,
- une source de lumière (31),
- des moyens optiques amont (6,32,34) propres à collecter la lumière (F1) issue de la source (31) et à délivrer cette lumière collectée (F1) au niveau du passage obligé (15) sous forme d'un faisceau de lumière délivrée amont (FC) de caractéristiques géométriques et spectrales choisies,
- des premiers moyens capteurs (20) propres à délivrer à une unité d'analyse (24) de premiers signaux représentatifs de premières informations véhiculées par un faisceau de lumière collectée (FT),
- des premiers moyens optiques aval (18,19,42) pour collecter une partie au moins du faisceau de lumière (FT) obtenue après traversée du passage obligé (15) et délivrer ce faisceau de lumière collectée (FT) aux premiers moyens capteurs (20) sous forme d'un faisceau de lumière délivrée aval (FTT,FTD) de caractéristiques géométriques et spectrales choisies,
**caractérisé en ce que** l'un au moins des moyens optiques amont (32) et des premiers moyens optiques aval (42) comprend au moins un premier élément optique diffractif (32;42) pour la mise en forme géométrique et spectrale dudit faisceau délivré dont l'une au moins des surfaces (33;43), qui interagissent avec le faisceau de lumière qu'elles collectent, présente un premier motif tridimensionnel prédéterminé propre à réaliser une interaction prédéterminée entre la lumière qu'elle collecte (F1;FT) et la lumière qu'elle délivre (FC;FTT,FTD), compte tenu des caractéristiques respectives de ces deux lumières.

2. Dispositif selon la revendication 1, **caractérisé en ce que** la source de lumière (31) est une source à rayonnement sensiblement monochromatique dont la longueur d'onde d'émission est choisie de sorte qu'elle induise la fluorescence d'une partie au moins du fluide traversant le passage obligé (15).

3. Dispositif selon la revendication 2, **caractérisé en ce qu'**il comprend de seconds moyens capteurs (36) destinés à délivrer à l'unité d'analyse (24) de seconds signaux représentatifs de secondes informations véhiculées par de la fluorescence émise par le fluide lors de son interaction avec la lumière (FC) au niveau du passage obligé (15).

4. Dispositif selon l'une des revendications 1 à 3, **caractérisé en ce qu'**il comprend de troisièmes moyens capteurs (40) destinés à délivrer à l'unité d'analyse (24) de troisièmes signaux représentatifs de troisièmes informations véhiculées par de la lumière (FTD) diffractée par le fluide lors de son interaction avec la lumière (FC) au niveau du passage obligé.

5. Dispositif selon l'une des revendications 1 à 4, **caractérisé en ce que** les moyens optiques amont comprennent le premier élément optique diffractif (32), dont l'une au moins des surfaces (33), qui interagissent avec la lumière (F1) délivrée par la source (31), présente le premier motif tridimensionnel prédéterminé en fonction des caractéristiques de la source (31) et des caractéristiques choisies requises pour l'illumination (FC) du passage obligé (15).

6. Dispositif selon l'une des revendications 4 et 5, **caractérisé en ce que** les premiers moyens optiques aval comprennent au moins un second élément optique diffractif (42) dont l'une au moins des surfaces (43), qui interagissent avec la lumière (FT) obtenue après traversée du passage obligé (15), présente un second motif tridimensionnel prédéterminé en fonction d'une fonction de transfert fréquentielle et géométrique de l'un au moins des premiers (20) et troisièmes (40) moyens capteurs.

7. Dispositif selon l'une des revendications 5 et 6, **caractérisé en ce que** les premier et second motifs tridimensionnels sont respectivement des premier (38) et second (48) réseaux diffractifs gravés dans des substrats (39;49) transparents à la longueur d'onde d'émission de la source et/ou la longueur d'onde de fluorescence.

8. Dispositif selon l'une des revendications 1 à 4, **caractérisé en ce que** les moyens optiques aval comprennent le premier élément optique diffractif (42), dont l'une au moins des surfaces (43), qui interagissent avec la lumière (F1) délivrée par la source (31), présente le premier motif tridimensionnel prédéterminé en fonction d'une fonction de transfert fréquentielle et géométrique entre l'un au moins des premiers (20) et troisièmes (40) moyens capteurs.

9. Dispositif selon la revendication 8, **caractérisé en ce que** le premier motif tridimensionnel est un premier (48) réseau diffractif gravé dans un substrat (49) transparent aux longueurs d'onde d'émission de la source et de fluorescence.

10. Dispositif selon l'une des revendications 7 à 9, **caractérisé en ce que** les premier et second réseaux diffractifs (38,48) sont de type numérique à modulation de relief, ladite modulation représentant une fonction prédéterminée capable d'action diffractante cohérente sur la phase et/ou l'amplitude respectivement de la lumière (F1) émise par la source (31) et de la lumière (FT) obtenue après traversée du passage obligé (15).

11. Dispositif selon la revendication 10, **caractérisé en ce que** les premier et second réseaux diffractifs possèdent chacun une modulation de relief d'au moins deux niveaux, et de préférence seize niveaux.

12. Dispositif selon l'une des revendications 1 à 11, **caractérisé en ce que** les caractéristiques géométriques et spectrales choisies, requises pour l'illumination du passage obligé (15), comprennent une illumination uniforme, à la longueur d'onde choisie, d'une surface sensiblement plane, fermée et de géométrie donnée.

13. Dispositif selon la revendication 12, **caractérisé en ce que** la surface illuminée est un rectangle.

14. Dispositif selon l'une des revendications 1 à 13, **caractérisé en ce que** le premier élément optique diffractif (32) est du type dit de Fresnel.

15. Dispositif selon l'une des revendications 6 à 14, **caractérisé en ce que** le second élément optique diffractif (42) est du type dit de Fourier.

16. Dispositif selon l'une des revendications 1 à 13, **caractérisé en ce que** le premier élément optique diffractif (32) est du type dit de Fourier.

17. Dispositif selon l'une des revendications 6 à 13, et 16, **caractérisé en ce que** le second élément optique diffractif (42) est du type dit de Fresnel.

18. Dispositif selon l'une des revendications 5 à 7 en combinaison avec l'une des revendications 10 à 14, **caractérisé en ce que** le premier élément optique diffractif (32) comprend une unique surface (33) comportant un motif diffractant de type Fresnel à seize niveaux.

19. Dispositif selon l'une des revendications 6 et 7 en combinaison avec l'une des revendications 10 à 15, **caractérisé en ce que** le second élément optique diffractif comprend une unique surface (43) comportant un motif diffractant de type Fourier à seize niveaux.

20. Dispositif selon l'une des revendications 6 à 19, **caractérisé en ce que** l'un au moins des éléments optiques diffractifs présente un motif tridimensionnel prédéterminé propre à assurer une séparation spatiale de longueurs d'onde prédéterminées.

21. Dispositif selon l'une des revendications 3 à 20, **caractérisé en ce que** l'un au moins des éléments optiques diffractifs présente un motif tridimensionnel prédéterminé propre à assurer un filtrage de la longueur d'onde et de la répartition géométrique de la fluorescence, et à délivrer aux seconds moyens capteurs (36) une lumière de fluorescence de caractéristiques géométriques et spectrales choisies.

## Claims

1. Device for optical inspection of a fluid, of the type comprising:
- a measurement space (8) that includes an obligatory passage (15) for the fluid;
- a light source (31);
- upstream optical means (6, 32, 34) suitable for collecting the light (F1) emanating from the source (31) and for delivering this collected light (F1) to the obligatory passage (15) in the form of an upstream delivered light beam (FC) having chosen geometric and spectral characteristics;
- first sensor means (20) suitable for delivering to an analyser (24) first signals representative of first data conveyed by a collected light beam (FT); and
- first downstream optical means (18, 19, 42) for collecting at least part of the light beam (FT), obtained after it has passed through the obligatory passage (15), and for delivering this collected light beam (FT) to the first sensor means (20) in the form of a downstream delivered light beam (FTT, FTD) having chosen geometric and spectral characteristics;
**characterized in that** at least one of the upstream optical means (32) and of the first downstream optical means (42) comprises at least one first diffractive optical element (32; 42) for the geometric and spectral shaping of the said delivered beam, at least one of the surfaces (33; 43) of which first diffractive element, which interact with the light beam that the said surfaces collect, exhibits a first predetermined three-dimensional pattern suitable for producing a predetermined interaction between the light (F1; FT) that it collects and the light (FC; FTT, FTD) that it delivers, taking into account the respective characteristics of these two lights.

2. Device according to Claim 1, **characterized in that** the light source (31) is a source of substantially monochromatic radiation, the emission wavelength of which is chosen in such a way that it induces fluorescence of at least part of the fluid flowing through the obligatory passage (15).

3. Device according to Claim 2, **characterized in that** it includes second sensor means (36) intended to deliver to the analyser (24) second signals representative of second data conveyed by fluorescence emitted by the fluid during its interaction with the light (FC) in the obligatory passage (15).

4. Device according to one of Claims 1 to 3, **characterized in that** it includes third sensor means (40) intended to deliver to the analyser (24) third signals representative of third data conveyed by the light (FTD) diffracted by the fluid during its interaction with the light (FC) in the obligatory passage.

5. Device according to one of Claims 1 to 4, **characterized in that** the upstream optical means comprise the first diffractive optical element (32), at least one (33) of whose surfaces, which interact with the light (F1) delivered by the source (31), exhibits the first predetermined three-dimensional pattern depending on the characteristics of the source (31) and of the chosen characteristics required for the illumination (by FC) of the obligatory passage (15).

6. Device according to either of Claims 4 and 5, **characterized in that** the first downstream optical means comprise at least one second diffractive optical element (42), at least one (43) of whose surfaces, which interact with the light (FT) obtained after it has passed through the obligatory passage (15), exhibits a second predetermined three-dimensional pattern according to a geometric and frequency-type transfer function of at least one of the first (20) and third (40) sensor means.

7. Device according to either of Claims 5 and 6, **characterized in that** the first and second three-dimensional patterns are respectively first (38) and second (48) diffraction gratings etched in substrates (39; 49) that are transparent at the emission wavelength of the source and/or the fluorescence wavelength.

8. Device according to one of Claims 1 to 4, **characterized in that** the downstream optical means comprise the first diffractive optical element (42), at least one (43) of whose surfaces, which interact with the light (F1) delivered by the source (31), exhibits the first predetermined three-dimensional pattern according to a geometric and frequency-type transfer function between at least one of the first (20) and third (40) sensor means.

9. Device according to Claim 8, **characterized in that** the first three-dimensional pattern is a first diffraction grating (48) etched in a substrate (49) that is transparent at the emission wavelength of the source and the fluorescence wavelength.

10. Device according to one of Claims 7 to 9. **characterized in that** the first and second diffraction gratings (38, 48) are of the digital type with relief modulation, the said modulation representing a predetermined function capable of coherent diffracting action on the phase and/or the amplitude of the light (F1) emitted by the source (31) and of the light (FT) obtained after it has passed through the obligatory passage (15), respectively.

11. Device according to Claim 10, **characterized in that** the first and second diffraction gratings each possess a relief modulation of at least two levels, and preferably sixteen levels.

12. Device according to one of Claims 1 to 11, **characterized in that** the chosen geometric and spectral characteristics required for illuminating the obligatory passage (15) comprise a uniform illumination, at the chosen wavelength, of a closed, approximately plane surface of given geometry.

13. Device according to Claim 12, **characterized in that** the illuminated surface is a rectangle.

14. Device according to one of Claims 1 to 13, **characterized in that** the first diffractive optical element (32) is of the Fresnel type.

15. Device according to one of Claims 6 to 14, **characterized in that** the second diffractive optical element (42) is of the Fourier type.

16. Device according to one of Claims 1 to 13, **characterized in that** the first diffractive optical element (32) is of the Fourier type.

17. Device according to one of Claims 6 to 13, and 16, **characterized in that** the second diffractive optical element (42) is of the Fresnel type.

18. Device according to one of Claims 5 to 7 in combination with one of Claims 10 to 14, **characterized in that** the first diffractive optical element (32) has a single surface (33) having a Fresnel-type diffraction pattern with sixteen levels.

19. Device according to either of Claims 6 and 7 in combination with one of Claims 10 to 15, **characterized in that** the second diffractive optical element has a single surface (43) having a Fourier-type diffraction pattern with sixteen levels.

20. Device according to one of Claims 6 to 19, **characterized in that** at least one of the diffractive optical elements has a predetermined three-dimensional pattern suitable for ensuring spatial splitting of predetermined wavelengths.

21. Device according to one of Claims 3 to 20, **characterized in that** at least one of the diffractive optical elements has a predetermined three-dimensional pattern suitable for filtering the wavelength and the geometric distribution of the fluorescence and for delivering fluorescence light of chosen geometric and spectral characteristics to the second sensor means (36).

## Patentansprüche

1. Optische Prüfvorrichtung für ein Fluid, die folgendes aufweist :
- eine Messkammer (8) mit einem Zwangsdurchgang (15) für das Fluid,
- eine Lichtquelle (31),
- stromaufwärts angeordnete optische Einrichtungen (6, 32, 34), die dazu ausgelegt sind, das aus der Lichtquelle (31) austretende Licht (F1) aufzufangen und dieses aufgefangene Licht (F1) in Form eines stromaufwärts abgegebenen Lichtbündels (FC) mit ausgewählten geometrischen und spektralen Eigenschaften zum Bereich des Zwangsdurchgangs (15) zu schicken,
- erste Sensoreinrichtungen (20), die dazu ausgelegt sind, an eine Analyseeinheit (24) erste Signale abzugeben, die repräsentativ für erste, vom aufgefangenen Lichtbündel (FT) übertragene Informationen sind,
- erste, stromabwärts angeordnete optische Einrichtungen (18, 19, 42), um zumindest einen Teil des Lichtbündels (FT), das nach dem Durchqueren des Zwangsdurchgangs (15) erhalten wird, aufzufangen und dieses aufgefangene Lichtbündel (FT) in Form eines stromabwärts abgegebenen Lichtbündels (FTT, FTD) mit ausgewählten geometrischen und spektralen Eigenschaften an die ersten Sensoreinrichtungen (20) zu schicken,
**dadurch gekennzeichnet, dass**
die stromaufwärts angeordneten optischen Einrichtungen (32) und/oder die stromabwärts angeordneten optischen Einrichtungen (42) mindestens ein erstes optisches Beugungselement (32; 42) zur geometrischen und spektralen Formgebung des abgegebenen Lichtbündels umfasst, wovon mindestens eine der Oberflächen (33; 43), die in Wechselwirkung mit dem Lichtbündel stehen, das sie auffangen, ein erstes, vorbestimmtes, dreidimensionales Muster aufweist, das dazu ausgelegt ist, eine vorbestimmte Wechselwirkung zwischen dem Licht, das sie auffängt (F1; FT) und dem Licht, das sie abgibt (FC; FTT, FTD) unter Berücksichtigung der jeweiligen Eigenschaften dieser beiden Lichtstrahlen zu realisieren.

2. Vorrichtung nach Anspruch 1,
**dadurch gekennzeichnet, dass**
die Lichtquelle (31) eine Lichtquelle mit im Wesentlichen monochromatischer Strahlung ist, deren Sendewellenlänge so ausgewählt ist, dass sie eine Fluoreszenz zumindest eines Teils des Fluids, das den Zwangsdurchgang (15) durchquert, induziert.

3. Vorrichtung nach Anspruch 2,
**dadurch gekennzeichnet, dass**
sie zweite Sensoreinrichtungen (36) umfasst, die dazu bestimmt sind, an die Analyseeinheit (24) zweite Signale abzugeben, die für zweite Informationen repräsentativ sind, die durch die vom Fluid während seiner Wechselwirkung mit dem Licht (FC) im Bereich des Zwangsdurchgangs (15) ausgesandte Fluoreszenz übertragen werden.

4. Vorrichtung nach einem der Ansprüche 1 bis 3,
**dadurch gekennzeichnet, dass**
sie dritte Sensoreinrichtungen (40) umfasst, die dazu bestimmt sind, an die Analyseeinheit (24) dritte Signale abzugeben, die für dritte Informationen repräsentativ sind, die durch das vom Fluid während seiner Wechselwirkung mit dem Licht (FC) im Bereich des Zwangsdurchgangs gebeugte Licht (FTD) übertragen werden.

5. Vorrichtung nach einem der Ansprüche 1 bis 4,
**dadurch gekennzeichnet, dass**
die stromaufwärts angeordneten optischen Einrichtungen ein erstes optisches Beugungselement (32) umfassen, wovon zumindest eine der Oberflächen (33), die mit dem von der Lichtquelle (31) abgegebenen Licht (F1) in Wechselwirkung stehen, das erste, vorbestimmte, dreidimensionale Muster in Abhängigkeit von den Eigenschaften der Lichtquelle (31) und ausgewählten Eigenschaften aufweist, die für die Beleuchtung (FC) des Zwangsdurchgangs (15) erforderlich sind.

6. Vorrichtung nach einem der Ansprüche 4 und 5,
**dadurch gekennzeichnet, dass**
die ersten, stromabwärts angeordneten optischen Einrichtungen mindestens ein zweites optisches Beugungselement (42) umfassen, wovon zumindest eine der Oberflächen (43), die mit dem Licht (FT) in Wechselwirkung stehen, das nach dem Durchqueren des Zwangsdurchgangs (15) erhalten wird, ein zweites, vorbestimmtes, dreidimensionales Muster in Abhängigkeit einer Frequenz- und Geometrie-Übertragungsfunktion der ersten (20) und/oder dritten (40) Sensoreinrichtungen aufweist.

7. Vorrichtung nach einem der Ansprüche 5 und 6,
**dadurch gekennzeichnet, dass**
die ersten und zweiten dreidimensionalen Muster jeweils erste (38) und zweite (48) Beugungsgitter sind, die in für die Sendewellenlänge der Lichtquelle und/oder die Fluoreszenzwellenlänge durchlässige Substrate (39; 49) eingeprägt sind.

8. Vorrichtung nach einem der Ansprüche 1 bis 4, **dadurch gekennzeichnet, dass** die stromabwärts angeordneten optischen Einrichtungen das erste optische Beugungselement (42) umfassen, wovon zumindest eine der Oberflächen (43), die mit dem von der Lichtquelle (31) abgegebenen Licht (F1) in Wechselwirkung stehen, das erste, vorbestimmte, dreidimensionale Muster in Abhängigkeit von einer Frequenz- und Geometrie-Übertragungsfunktion zwischen mindestens einer der ersten (20) und dritten (40) Sensoreinrichtungen aufweist.

9. Vorrichtung nach Anspruch 8,
**dadurch gekennzeichnet, dass**
das erste dreidimensionale Muster ein erstes (48) Beugungsgitter ist, das in ein für die Sendewellenlängen der Lichtquelle und Fluoreszenz durchlässiges Substrat (49) eingeprägt ist.

10. Vorrichtung nach einem der Ansprüche 7 bis 9,
**dadurch gekennzeichnet, dass**
die ersten und zweiten Beugungsgitter (38, 48) von der digitalen Art mit stereoskopischer Modulation sind, wobei die Modulation eine vorbestimmte Funktion aufweist, die einer kohärenten Beugungswirkung auf die Phase und/oder die Amplitude des von der Lichtquelle (31) abgegebenen Lichts (F1) bzw. des Lichts (FT) fähig ist, das nach dem Durchqueren des Zwangsdurchgangs (15) erhalten wird.

11. Vorrichtung nach Anspruch 10,
**dadurch gekennzeichnet, dass**
die ersten und zweiten Beugungsgitter jeweils stereoskopische Modulation mit mindestens zwei Stufen, und vorzugsweise sechzehn Stufen besitzen.

12. Vorrichtung nach einem der Ansprüche 1 bis 11,
**dadurch gekennzeichnet, dass**
die ausgewählten geometrischen und spektralen Eigenschaften, die für die Beleuchtung des Zwangsdurchgangs (15) erforderlich sind, eine gleichmäßige Beleuchtung mit der ausgewählten Wellenlänge einer Oberfläche umfassen, die im Wesentlichen plan, geschlossen und von bestimmter Geometrie ist.

13. Vorrichtung nach Anspruch 12,
**dadurch gekennzeichnet, dass**
die beleuchtete Oberfläche ein Rechteck ist.

14. Vorrichtung nach einem der Ansprüche 1 bis 13,
**dadurch gekennzeichnet, dass**
das erste optische Beugungselement (32) vom Fresnel-Typ ist.

15. Vorrichtung nach einem der Ansprüche 6 bis 14,
**dadurch gekennzeichnet, dass**
das zweite optische Beugungselement (42) vom Fourier-Typ ist.

16. Vorrichtung nach einem der Ansprüche 1 bis 13,
**dadurch gekennzeichnet, dass**
das erste optische Beugungselement (32) vom Fourier-Typ ist.

17. Vorrichtung nach einem der Ansprüche 6 bis 3,
**dadurch gekennzeichnet, dass**
das zweite optische Beugungselement (42) vom Fresnel-Typ ist.

18. Vorrichtung nach einem der Ansprüche 5 bis 7 in Kombination mit einem der Ansprüche 10 bis 14,
**dadurch gekennzeichnet, dass**
das erste optische Beugungselement (32) eine einzige Oberfläche (33) umfasst, die ein Fresnel-Beugungsmuster mit sechzehn Stufen umfasst.

19. Vorrichtung nach einem der Ansprüche 6 und 7 in Kombination mit einem der Ansprüche 10 bis 15,
**dadurch gekennzeichnet, dass**
das zweite optische Beugungselement eine einzige Oberfläche (43) mit einem Fourier-Beugungsmuster mit sechzehn Stufen umfasst.

20. Vorrichtung nach einem der Ansprüche 6 bis 19,
**dadurch gekennzeichnet, dass**
mindestens eines der optischen Beugungselemente ein vorbestimmtes dreidimensionales Muster aufweist, das dazu ausgelegt ist, eine räumliche Trennung der vorbestimmten Wellenlängen sicherzustellen.

21. Vorrichtung nach einem der Ansprüche 3 bis 20,
**dadurch gekennzeichnet, dass**
mindestens eines der optischen Beugungselemente ein vorbestimmtes dreidimensionales Muster aufweist, das dazu ausgelegt ist, eine Filterung der Wellenlänge und der geometrischen Verteilung der Fluoreszenz sicherzustellen und an die zweiten Sensoreinrichtungen (36) ein Fluoreszenzlicht mit ausgewählten geometrischen und spektralen Eigenschaften abzugeben.
